Europäisches Patentamt

European Patent Office

Office européen des brevets

(11) Publication number : **0 507 717 A2**

# (12) EUROPEAN PATENT APPLICATION

(21) Application number : **92480032.9**

(22) Date of filing : **26.02.92**

(51) Int. Cl.⁵ : **G06F 15/20**

(30) Priority : **01.04.91 US 678477**

(43) Date of publication of application :
**07.10.92 Bulletin 92/41**

(84) Designated Contracting States :
**DE FR GB**

(71) Applicant : **International Business Machines
Corporation
Old Orchard Road
Armonk, N.Y. 10504 (US)**

(72) Inventor : **Maldonada, Martin F.
4125 Cripple Creek Way
Kennesaw, Georgia 30144 (US)**
Inventor : **Sewell, Marc T.
1934 Penny Lane
Marietta, Georgia 30067 (US)**

(74) Representative : **de Pena, Alain
Compagnie IBM France Département de
Propriété Intellectuelle
F-06610 La Gaude (FR)**

(54) **Method and apparatus for interchange of customization characteristics of formatted business data.**

(57)   A method and apparatus for interchanging the customization characteristics of formatted business data in a distributed data processing system between a first system utilizing a first data format and a second system utilizing a second data format. A set of customization characteristics are created which may be utilized to translate business data between a first data format and a second data format. The customization characteristics are then translated into a standard data interchange format, if necessary, and transmitted throughout the distributed data processing system to all relevant entities therein. Thereafter the set of customization characteristics may be utilized throughout a distributed data processing system to ensure uniform translation of business data between the first data format and the second data format. In one embodiment of the present invention, each recipient of the transmitted customization characteristics transmits an acknowledgement of the receipt thereof. Additionally, customization characteristics may be stored within a central database for periodic access by any entity within the distributed data processing system desiring to translate formatted business data.

EP 0 507 717 A2

Fig. 3

The present invention relates in general to an improved method for the interchange of customization characteristics of formatted business data and in particular to an improved method for maintaining interchange information for use with formatted business data. Still more particularly, the present invention relates to a method and apparatus for centrally controlling the management of the interchange of formatted business data.

Electronic Data Interchange (EDI) is a well known technique for exchanging information between computer systems. Formatted business data is often exchanged between multiple parties, such as a manufacturer and a supplier, who have previously agreed to exchange such information. This information is generally electronically transmitted by way of a distributed data processing network utilizing an agreed upon standard. The standard may be industry supplied, national or international in its format and will specify the standard format of business documents such as invoices, purchase orders, payments, bills of lading and so forth. A translator must be utilized at each end of the electronic transmission to ensure that data in the standard format is accurately translated into the format desired by the recipient of the information.

Many different Electronic Data Interchange (EDI) standards are known in the prior art. For example, the American National Standards Institute (ANSI) X12 standard is utilized by many trading partners to exchange electronic data. Further, the EDIFACT standard, promulgated by the International Organization of Standardization in Geneva, Switzerland may also be utilized to transmit business data between cooperating trading partners. Data interchange between two trading partners is; however, more complex than the simple agreement between those trading partners to utilize a particular standard.

An interface between public and private networks for sending and receiving transactions, files and messages must be established. Customization and maintenance of standards to match various trading partners and applications must be accomplished. ,The status of transactions and the recording of that Status in an event log is generally desired. User access control by means of passwords and levels of authority is also typically utilized. Finally, translation of transactions between one trading partner's applications format and the interchange standard must be accomplished in an error free manner in order to provide accurate data interchange.

In the Electronic Data Interchange (EDI) environment the standards generally accepted by various trading partners are continually evolving. Therefore, periodic changes must be published. If a particular trading partners does not react to these changes in a timely manner, large amounts of information may be lost or rendered erroneous. Further, management of these changes is also complicated by the coordination which is required to put the changes into effect at a selected time for all entities within the electronic data transmission network.

The maintenance of Electronic Data Interchange (EDI) standards is generally performed in the prior art through a customization facility. The customization facility provides the capability to make changes to information concerning standards, trading partners, networks and applications. These changes are manually processed utilizing the customization of facility, a time consuming and error prone process. Thereafter, these changes must be disseminated to other informations via a printed document which may be subject to misinterpretation and/or rekeying errors by the receiver. Additionally, the customization facility must thereafter coordinate with all receivers of the information to determine when the changes will take effect.

The above-described maintenance process is extremely risky from a data integrity standpoint. The customization process has considerable potential for losses due to the inability of portions of the system to support a testing environment prior to implementation. In order to minimize this risk, knowledgeable individuals with Electronic Data Interchange (EDI) skills are required. Such individuals must be capable of understanding all aspects of the changes being implemented as they affect the particular trading partners involved.

In view of the above, it should therefore be apparent that a need exists for an improved method and apparatus for interchanging the customization characteristics of formatted business data between various elements of a distributed data processing network.

SUMMARY OF THE INVENTION

It is therefore one object of the present invention to provide an improved method for interchanging the customization characteristics of formatted business data.

It is another object of the present invention to provide an improved method for interchanging the customization characteristics of formatted business data in a consistent and error free manner.

It is yet another object of the present invention to provide a centralized customization facility which may be utilized for the interchanging the customization characteristics of formatted business data between a group of trading partners in a distributed data processing network.

The foregoing objects are achieved as is now described. The method and apparatus of the present invention may be utilized for interchanging the customization characteristics of formatted business data in a distributed data processing system between a first system utilizing a first data format and a second system utilizing a second data format. A set of customization characteristics are created which may be utilized to translate business data between a first data format and a second data format. The customization characteristics are then translated into a standard data interchange format, if necessary, and transmitted throughout a distributed data processing system to all relevant entities therein. Thereafter the set of customization characteristics may be utilized throughout the distributed data processing system to ensure uniform translation of business data between the first data format and the second data format. In one embodiment of the present invention, each recipient of the transmitted customization characteristics transmits an acknowledgement of the receipt thereof. Additionally, customization characteristics may be stored within a central database for periodic access by any entity within the distributed data processing system desiring to translate formatted business data.

The invention will best be understood by reference to the following detailed description of an illustrative embodiment when read in conjunction with the accompanying drawings, wherein:

Figure 1 is a pictorial representation of a distributed data processing system which may be utilized to implement the method and apparatus of the present invention;

Figure 2 is a block diagram illustrating one embodiment of an Electronic Data Interchange (EDI) system which may be utilized to implement the method and apparatus of the present invention;

Figure 3 is a high level flow chart illustrating the promulgation of translation changes throughout a distributed data processing system utilizing the method and apparatus of the present invention; and

Figure 4 is a high level flow chart illustrating the receipt of translation changes throughout a distributed data processing system utilizing the method and apparatus of the present invention.

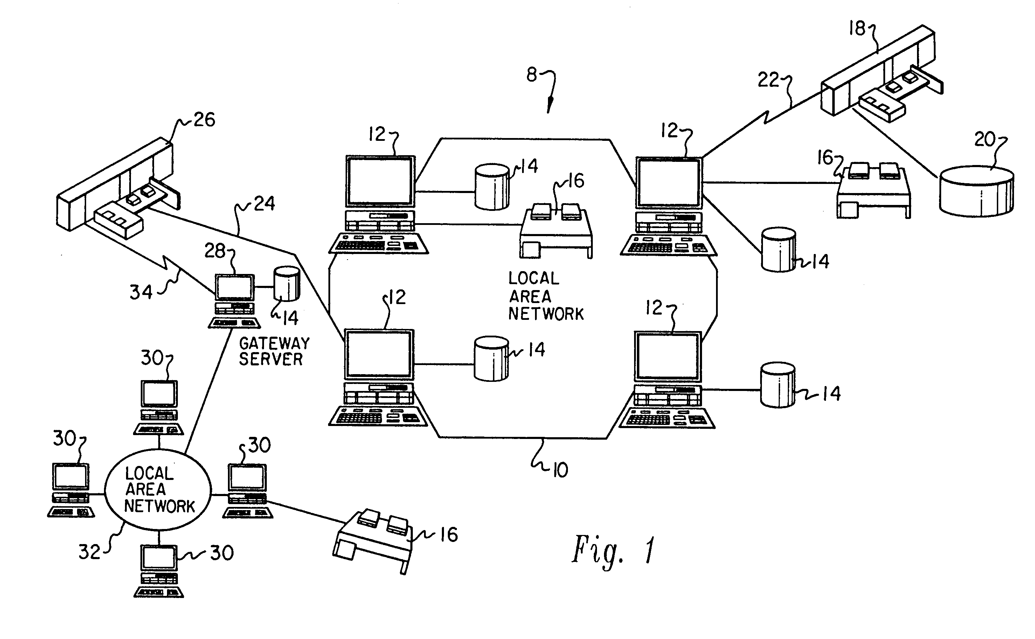

With reference now to the figures and in particular with reference to Figure 1, there is depicted a pictorial representation of a data processing system 8 which may be utilized to implement the method and apparatus of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method and apparatus of the present invention, to store the customization characteristics or formatted business data which may be periodically accessed and interchanged by a user within data processing system 8, in accordance with the method and apparatus of the present invention.

Still referring to Figure 1, it may also be seen that data processing system 8 may also include multiple mainframe computers, such as mainframe computer 18, which may be preferably coupled to Local Area Network (LAN) 10 by means of communications link 22. Mainframe computer 18 may also be coupled to a storage device 30 which may serve as remote storage for Local Area Network (LAN) 10. Additionally, mainframe computer 26 is illustrated and may be coupled via communications link 34 to a gateway server 28. Gateway server 28 is preferably an individual computer or work station which serves to link Local Area Network (LAN) 32 to Local Area Network (LAN) 10.

As discussed above with respect to Local Area Network (LAN) 32 and Local Area Network (LAN) 10, a plurality of data processing documents, such as formatted business records, may be stored within storage device 20 and controlled by mainframe computer 18, as resource manager or library service for the data processing procedures and/or documents thus stored. Of course, those skilled in the art will appreciate that mainframe computer 18 may be located a great geographical distance from Local Area Network (LAN) 10 and similarly Local Area Network (LAN) 10 may be located a substantial distance from Local Area Network (LAN) 32. That is, Local Area Network (LAN) 32 may be located in California while Local Area Network (LAN) 10 may be located within Texas and mainframe computer 18 may be located in New York.

As will be appreciated upon reference to the foregoing,,it is often desirable for formatted business data within one portion of data processing system 8 to be transmitted to one or more users within another portion of data processing system 8 in a manner such that that data may be effectively and efficiently utilized by that user upon receipt. Various standards for electronic data interchange exist which permit data an agreed upon standard format to be interchanged throughout a distributed data processing system such as data processing system 8; however, that data must thereafter be translated into specific data formats which are utilizable by the recipient of that data. Thus, it is an object of the present invention to provide a method and apparatus whereby formatted business data may be efficiently interchanged throughout a distributed data processing system.

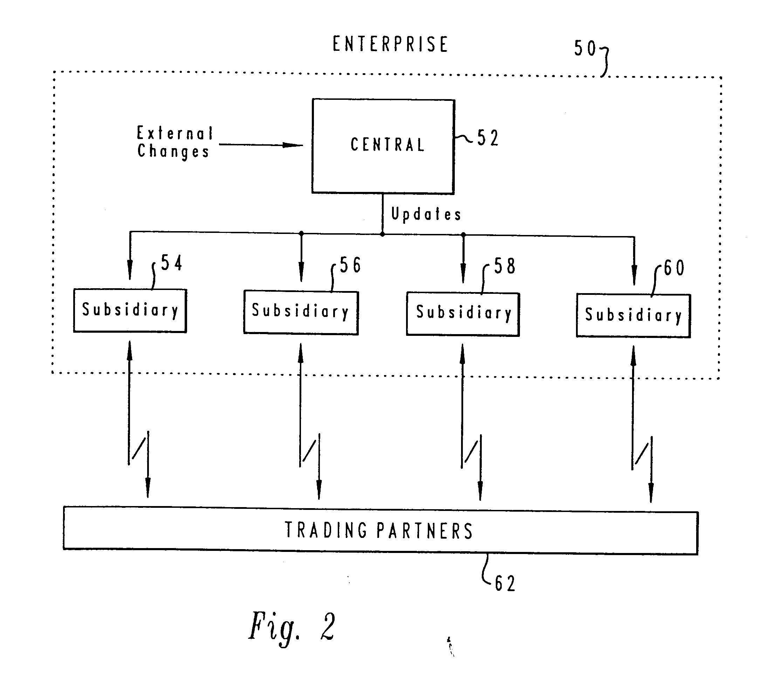

Referring now to Figure 2, there is depicted a block diagram illustrating one embodiment of an Electronic Data Interchange (EDI) system which may be utilized with the method and apparatus of the present invention. As depicted in Figure 2 a large enterprise 50 is illustrated. Enterprise 50 may comprise a large business enterprise having multiple subsidiaries, locations, stores, operating units or other similar entities. Enterprise 50 includes a central location 52 and a plurality of subsidiary locations 54, 56, 58 and 60. All of the subsidiary locations, as illustrated, deal with an identical set of trading partners 62 and/or applications.

By "trading partners" what is meant is a group of entities not related to enterprise 50 with whom the interchange of formatted business data is desired. As discussed above, the actual interchange of formatted business data between a subsidiary of enterprise 50 and a trading partner within the set of trading partners 62 may be accomplished utilizing any well known interchange standard, such as the X12 or EDIFACT standard discussed above. However, the translation of formatted business data into the agreed upon standard or from the agreed upon standard to a second data format requires customization which must be accurately promulgated throughout the distributed data processing system.

The customization characteristics which are necessary to translate formatted business data into or from the agreed upon data interchange standard are often dictated as a result of external changes, that is changes to the standard which do not result from an activity within enterprise 50. Additionally, other changes in the customization characteristics to be utilized may arise as a result of updates which are internal to enterprise 50. That is, changes in the number or type of trading partners, changes in formats desired for internal business data applications or the like. Thus, in accordance with the depicted embodiment of the method and apparatus of the present invention, all changes which result in a variation in a customization characteristic necessary to translate formatted business data into or from a standard interchange format are established at a central location 52. Thereafter, these changes; having been tested and corrected, are promulgated to each subsidiary within enterprise 50. In this manner, enterprise 50 is assured of accurate and consistent translation of formatted business data into or from the Electronic Data Interchange (EDI) standard which is utilized.

As an additional feature of the method and apparatus of the present invention, one of the subsidiaries of enterprise 50 may be designated as a central database for customization characteristics to be utilized for translation of formatted business data into or from an agreed upon standard. In this manner, all customization characteristics necessary to translate formatted business data into or from the agreed upon interchange standard will be deposited with a central database and may thereafter be accessed by any recipient desiring to receive formatted business data. In this manner, enterprise 50 can be assured of consistent and accurate translation of business data from an application format into the agreed upon interchange standard or from the agreed upon interchange standard to a specific application format.

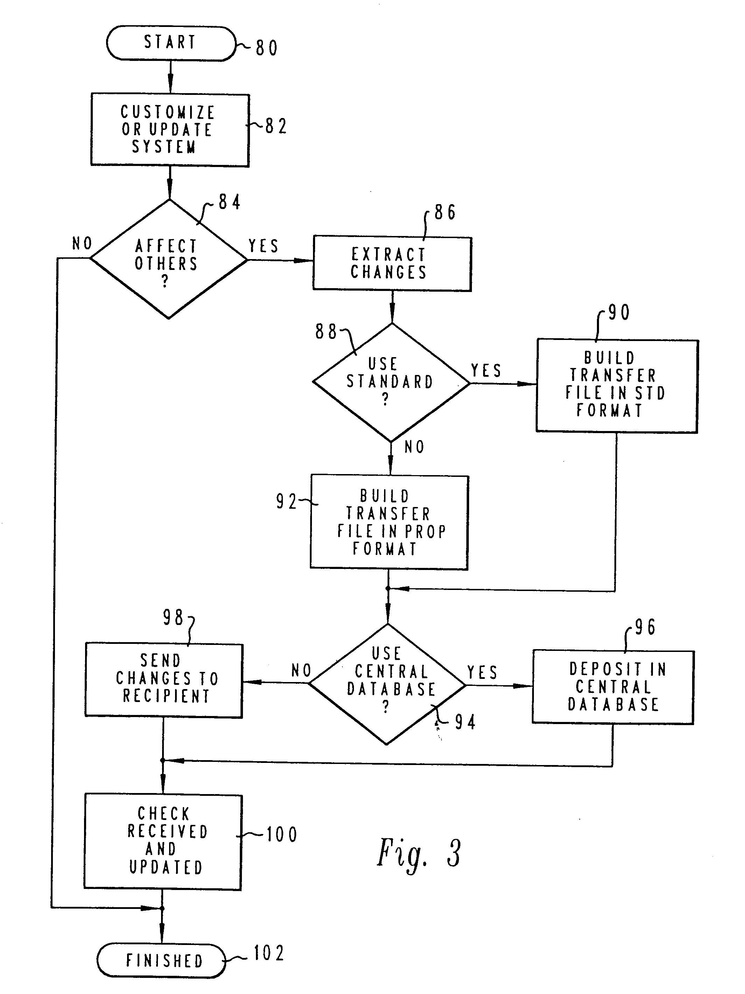

Referring now to Figure 3, there is depicted a high level flowchart illustrating the promulgation of translation changes throughout a distributed data processing system utilizing the method and apparatus of the present invention. As illustrated, the system begins at block 80 and thereafter passes to block 82 which depicts the desire on the part of the enterprise to customize or update the formatted business data interchange system. Thereafter the process passes to block 84 which depicts a determination of whether or not the customization or updating of the system will affect other entities within the enterprise. If not, the process merely passes to block 102 and terminates.

Referring again to block 84, in the event the customization or updating of the interchange system will affect others, block 86 illustrates the extracting of those changes which must be promulgated to other entities within the enterprise. Thereafter, the process passes to block 88 which illustrates a determination of whether or not the changes are to be promulgated throughout the distributed data processing system utilizing the agreed upon interchange standard. If so, the process passes to block 90 which depicts the building of a transfer file in the agreed upon interchange standard format.

Referring again to block 88, in the event the agreed upon interchange standard is not to be utilized, that is, a separate format is utilized for the promulgation of customization characteristics necessary to accurately translate formatted business data into or from the interchange standard, block 92 illustrates the building of a transfer file in the desired format. Thereafter, block 94 depicts a determination of whether or not the customization characteristics which have been extracted and encoded above are to be deposited in a central database for access by any recipient desiring to receive formatted business data within the enterprise. If so, the process passes to block 96 which illustrates the depositing of the current customization characteristics in the central database.

Referring again to block 94, in the event the storage of the customization characteristics within a central database is not desired, as determined in block 94, the process passes to block 98 which depicts the transmission of the customization characteristics to each desired recipient. Thereafter, the process passes to block 100 which illustrates the system checking to ensure that all desired changes have been received and updated by those recipients. Thereafter, the process terminates, as illustrated in block 102.

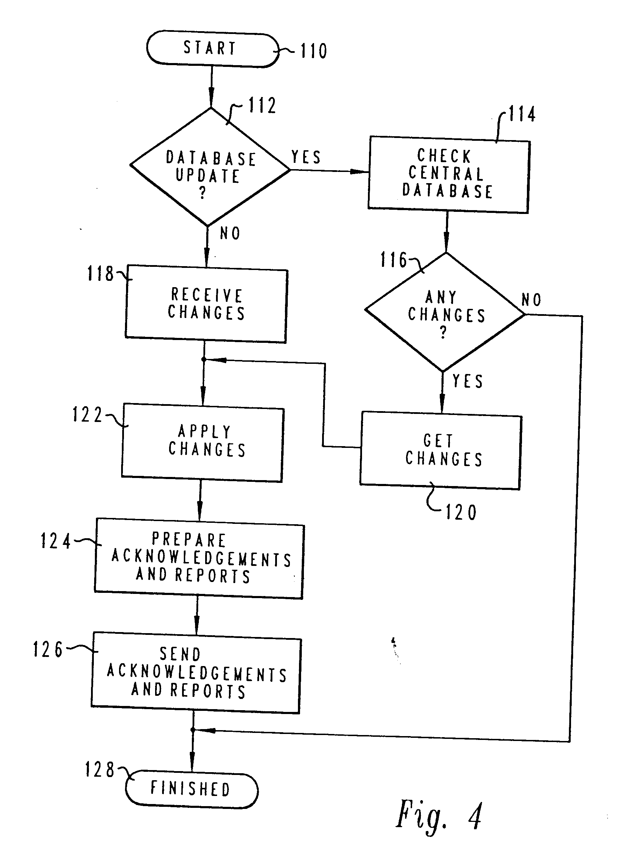

Finally, referring to figure 4, there is depicted a high level flowchart illustrating the receipt of translation changes throughout a distributed data processing system utilizing the method and apparatus of the present invention. As above, the process begins at block 110 and thereafter passes to block 112 which depicts a determination of whether or not the data received is an update to an established central database. If so, the process passes to block 114 which depicts the checking of the central database against the changes received. Thereafter, the process passes to block 116 which illustrates a determination of whether or not the database update represents a change from existing customization characteristics stored within the central database, and if not, the process passes to block 128 and terminates.

Referring again to block 116, if the customization characteristics received represent a change from those characteristics currently stored within the central database, the process passes to block 120 which illustrates the obtaining of those changes. Referring again to block 112, in the event the changes received are not a database update, the process passes to block 118 which depicts the receipt of the customization characteristic changes from a central location within enterprise 50 (see Figure 2).

Thereafter, after obtaining the changes or receiving changes directly from the central facility within enterprise 50, block 122 illustrates the applying of those changes to the customization characteristics which will be utilized to translate formatted business data from an application format to the agreed upon interchange standard or from the agreed upon interchange standard to the desired application format. Next, the process passes to block 124 which illustrates the preparation of an acknowledgement of receipt of those changes. Thereafter, block 126 depicts the transmission of that acknowledgement report to a central entity within enterprise 50. Thereafter, the process passes to block 128 and terminates.

Upon reference to the foregoing those skilled in the art will appreciate that the Applicants in the present invention have created a novel method and apparatus whereby customization characteristics necessary to accurately and efficiently translate formatted business data into an agreed upon interchange standard and from that agreed upon interchange standard to a desired application format may be accurately and efficiently promulgated from a central facility within a distributed data processing system to a central database or to all desired recipients within that enterprise. In this manner, errors in retransmission or in establishment of the translation facility are minimized and important business data is not lost.

## Claims

1.  A method in a distributed data processing system for interchanging the customization characteristics of formatted business data between a first system utilizing a first data format and a second system utilizing a second data format, said method comprising the steps of:
    creating a set of customization characteristics for translating data between said first data format and said second data format;
    transmitting said set of customization characteristics within said distributed data processing system; and
    automatically translating business data received at a said second system from said first system into said second data format utilizing said set of customization characteristics.

2.  The method according to Claim 1, wherein said step of creating a set of customization characteristics for translating data from said first data format to said second data format comprises creating a set of customization characteristics at a single location within said distributed data processing system wherein translation of business data is accomplished in a uniform fashion throughout said distributed data processing system.

3.  The method according to Claim 1, wherein said first and second systems each comprises a plurality of processing units within said distributed data processing system and wherein said step of transmitting said set of customization characteristics within said distributed data processing system comprises transmitting said set of customization characteristics to each of said plurality of processing units.

4.  The method according to Claim 1, further including the step of storing said set of customization characteristics within said distributed data processing system in conjunction with said second system.

5.  The method according to Claim 1, further including the step of translating said set of customization characteristics into a standardized interchange format prior to transmitting said set of customization characteristics within said distributed data processing system.

6.  The method according to Claim 1, further including the step of automatically transmitting an acknowledgement of receipt of said set of customization ,characteristics by each recipient thereof within said distributed data processing system.

7.  A distributed data processing system for interchanging the customization characteristics of formatted business data between a first system utilizing a first data format and a second system utilizing a second data format, said system comprising:

a set of customization characteristics for translating data between said first data format and said second data format;

means for transmitting said set of customization characteristics within said distributed data processing system; and

translation means for automatically translating business data received at said second system from said first system into said second format utilizing said set of customization characteristics.

8. The system according to claim 7 further including a central database for storing said set of customization characteristics in conjunction with said second system.

9. The system according to Claim 7, further including means for transmitting and acknowledgement of receipt of said set of customization characteristics by each recipient thereof within said distributed data processing system.

Fig. 1

EP 0 507 717 A2

ENTERPRISE  50

External Changes → CENTRAL ~52

Updates

Subsidiary 54  Subsidiary 56  Subsidiary 58  Subsidiary 60

TRADING PARTNERS

62

*Fig. 2*

Fig. 3

Fig. 4